# EUROPÄISCHE PATENTSCHRIFT

(11) **EP 3 401 584 B1**
(45) Veröffentlichungstag und Bekanntmachung des Hinweises auf die Patenterteilung: **08.07.2020**
(21) Anmeldenummer: 18170354.7
(22) Anmeldetag: 02.05.2018
(51) Int. Cl.: F16L 21/06, F01N 13/18

(54) **ROHR, INSBESONDERE ABGASFÜHRUNGSROHR**
PIPE, IN PARTICULAR EXHAUST PIPE
TUYAU, EN PARTICULIER TUYAU DE GAZ D'ÉCHAPPEMENT

(30) Priorität: 11.05.2017 DE 102017110217
(43) Veröffentlichungstag der Anmeldung: 14.11.2018
(73) Patentinhaber: Eberspächer Exhaust Technology GmbH & Co. KG, 66539 Neunkirchen (DE)
(72) Erfinder: Müller, Joachim, 72555 Metzingen (DE)
(74) Vertreter: Ruttensperger Lachnit Trossin Gomoll

(56) Entgegenhaltungen:
- CN-U- 202 612 913
- DE-A1-102015 201 489
- DE-C5-102006 057 881
- US-A- 1 661 674
- US-A- 4 113 289
- US-A- 4 629 226
- US-A- 5 588 680
- US-A1- 2006 071 471

## Beschreibung

Die vorliegende Erfindung betrifft ein Rohr, insbesondere Abgasführungsrohr für eine Abgasanlage einer Brennkraftmaschine, wobei an wenigstens einem axialen Rohrende ein Verbindungsbereich zur Verbindung des in Richtung einer Rohrlängsachse sich erstreckenden Rohrs mit einem in den Verbindungsbereich einzuschiebenden weiteren Rohr vorgesehen ist, wobei der Verbindungsbereich wenigstens einen Schlitz umfasst, wobei der Schlitz einen dem Rohrende näher gelegenen ersten Schlitzbereich und einen vom Rohrende axial weiter entfernt liegenden und in Umfangsrichtung bezüglich des ersten Schlitzbereichs versetzten zweiten Schlitzbereich aufweist.

Ein derartiges aus der US 5,588,680 bekanntes Rohr bzw. ein damit hergestellter Rohrverbund zweier Rohre ist in den Fig. 1 und 2 dargestellt. Bei diesem bekannten Rohrverbund 10 ist an einem axialen Rohrende 12 von einem ersten 14 der beiden Rohre 14, 16 ein Schlitz 18 mit zwei zueinander in Umfangsrichtung versetzten Schlitzbereichen 20, 22 vorgesehen. Zum Erzeugen eines festen Zusammenhalts der beiden ineinander eingeschobenen Rohre 14, 16 umgibt eine Rohrschelle 24 den Verbindungsbereich 26 des ersten Rohrs derart, dass der Schlitz 18 im Wesentlichen in seinem gesamten axialen Erstreckungsbereich durch die den Verbindungsbereich 26 in Umfangsrichtung zusammenspannende und somit radial gegen das zweite Rohr 16 pressende Rohrschelle 24 überdeckt ist.

Die US 2006/0071471 A1 offenbart ein Rohr gemäß dem Oberbegriff des Anspruchs 1, bei welchem zwei oder mehr derartige zueinander versetzte erste und zweite Schlitzbereiche aufweisende Schlitze vorgesehen sein können.

Es ist die Aufgabe der vorliegenden Erfindung, ein Rohr, insbesondere Abgasführungsrohr für eine Abgasanlage einer Brennkraftmaschine, vorzusehen, mit welchem eine verbesserte Dichtigkeit zweier miteinander zu verbindender Rohre erreicht werden kann.

Erfindungsgemäß wird diese Aufgabe gelöst durch ein Rohr, insbesondere Abgasführungsrohr für eine Abgasanlage einer Brennkraftmaschine, gemäß Anspruch 1. An wenigstens einem axialen Rohrende ist ein Verbindungsbereich zur Verbindung des in Richtung einer Rohrlängsachse sich erstreckenden Rohrs mit einem in den Verbindungsbereich einzuschiebenden weiteren Rohr vorgesehen, wobei der Verbindungsbereich zwei Schlitze umfasst, wobei jeder Schlitz einen dem Rohrende näher gelegenen, axial offenen ersten Schlitzbereich und einen vom Rohrende axial weiter entfernt liegenden und in Umfangsrichtung bezüglich des ersten Schlitzbereichs versetzten zweiten Schlitzbereich aufweist.

Die ersten Schlitzbereiche und die zweiten Schlitzbereiche sind in Umfangsrichtung jeweils durch eine dem jeweils anderen Schlitz zugewandte innere Schlitzkante und eine von dem jeweils anderen Schlitz abgewandte äußere Schlitzkante begrenzt.

Zum Einführen des Versatzes der Schlitzbereiche eines jeweiligen Schlitzes sind die inneren Schlitzkanten der ersten und zweiten Schlitzbereiche der beiden Schlitze durch innere Übergangskanten miteinander verbunden, und die äußeren Schlitzkanten der ersten und zweiten Schlitzbereiche der beiden Schlitze sind durch äußere Übergangskanten miteinander verbunden. Dabei ist zur Erlangung einer die Dichtwirkung unterstützenden gegenseitigen Anlage der inneren und äußeren Übergangskanten die innere Übergangskante oder/und die äußere Übergangskante beider Schlitze bezüglich einer in Umfangsrichtung sich erstreckenden Referenzlinie angewinkelt.

Dieses Rohr zeichnet sich dadurch aus, dass die beiden Schlitze bezüglich einer zur Rohrlängsachse im Wesentlichen parallelen Symmetrieachse im Wesentlichen spiegelsymmetrisch ausgebildet sind, und dass die zweiten Schlitzbereiche der beiden Schlitze in Umfangsrichtung bezüglich der ersten Schlitzbereiche aufeinander zu oder voneinander weg versetzt sind.

Durch die erfindungsgemäße Ausgestaltung eines Verbindungsbereichs eines Rohrs mit mehreren, insbesondere zwei Schlitzen wird eine verbesserte Verformbarkeit des Rohrs in seinem Verbindungsbereich gewährleistet. Weiter wird durch die Ausgestaltung der Schlitze derart, dass die ersten Schlitzbereiche dann, wenn die zweiten Schlitzbereiche aufeinander zu versetzt sind, einen größeren gegenseitigen Abstand aufweisen als die zweiten Schlitzbereiche, bzw. dann, wenn die zweiten Schlitzbereiche voneinander weg versetzt sind, einen kleineren gegenseitigen Abstand aufweisen als die zweiten Schlitzbereiche, in Verbindung mit der besseren Verformbarkeit des Rohrs und der beim Verspannen in Umfangsrichtung auftretenden Verringerung der jeweiligen Schlitzbreite eine verbesserte Dichtwirkung gewährleistet.

Um die Verformbarkeit des Rohrs in seinem Verbindungsbereich besonders effizient nutzen zu können, wird vorgeschlagen, dass ein Winkelabstand der inneren Schlitzkanten der ersten Schlitzbereiche in ihrem an das Rohrende angrenzenden Bereich kleiner als 180° ist, vorzugsweise im Bereich von 110° bis 130°, vorzugsweise bei etwa 120° liegt.

Bei einer vorteilhaften Weiterbildung des erfindungsgemäß aufgebauten Rohrs kann vorgesehen sein, dass bei wenigstens einem Schlitzbereich, vorzugsweise dem ersten Schlitzbereich und dem zweiten Schlitzbereich, von wenigstens einem Schlitz, vorzugsweise beiden Schlitzen, die äußere Schlitzkante oder/und die innere Schlitzkante sich im Wesentlichen in Richtung der Rohrlängsachse erstreckt oder/und die äußere Schlitzkante und die innere Schlitzkante sich zueinander im Wesentlichen parallel erstrecken.

Um einerseits eine ausreichende Verformbarkeit des Rohrs in seinem Verbindungsbereich zu gewährleisten, andererseits jedoch auch die zur Herstellung eine Dichtwirkung erforderliche Wechselwirkung der jeweiligen Schlitzkanten zu ermöglichen, können bei wenigstens einem Schlitzbereich, vorzugsweise dem ersten Schlitzbereich und dem zweiten Schlitzbereich, von wenigstens einem Schlitz, vorzugsweise beiden Schlitzen, die äußere Schlitzkante und die innere Schlitzkante einen Umfangsabstand im Bereich von 3 mm bis 5 mm, vorzugsweise etwa 4 mm, aufweisen.

Die ersten Schlitzbereiche der beiden Schlitze können in Richtung der Rohrlängsachse im Wesentlichen die gleiche Erstreckungslänge aufweisen. Ferner können die zweiten Schlitzbereiche der beiden Schlitze in Richtung der Rohrlängsachse im Wesentlichen die gleiche Erstreckungslänge aufweisen.

Beispielsweise kann die Ausgestaltung derart sein, dass bei beiden Schlitzen die innere Übergangskante und die äußere Übergangskante zueinander gleichsinnig bezüglich der Referenzlinie angewinkelt sind und eine der Übergangskanten, vorzugsweise die innere Übergangskante, bezüglich der Referenzlinie stärker angewinkelt ist, als die andere der Übergangskanten, vorzugsweise die äußere Übergangskante, wobei ein der stärker angewinkelten Übergangskante, vorzugsweise der inneren Übergangskante, näher liegendes Ende der weniger stark angewinkelten Übergangskante, vorzugsweise der äußeren Übergangskante, axial zwischen den beiden Enden der stärker angewinkelten Übergangskante, vorzugsweise der inneren Übergangskante, liegt.

Bei einer alternativen Ausgestaltung können bei beiden Schlitzen die innere Übergangskante und die äußere Übergangskante zueinander gegensinnig bezüglich der Referenzlinie angewinkelt sein, derart, dass eine der Übergangskanten, vorzugsweise die äußere Übergangskante mit der daran anschließenden Schlitzkante des ersten Schlitzbereichs eine Hinterschneidung bildet, wobei ein der anderen Übergangskante, vorzugsweise der inneren Übergangskante, näher liegendes Ende der einen Übergangskante, vorzugsweise der äußeren Übergangskante, axial zwischen den beiden Enden der anderen Übergangskante, vorzugsweise der inneren Übergangskante, liegt.

Um die im Wesentlichen symmetrische Ausgestaltung der beiden Schlitze gewährleisten zu können, wird vorgeschlagen, dass die äußeren Übergangskanten der beiden Schlitze zueinander gegensinnig oder/und in gleichem Ausmaß bezüglich der Referenzlinie angewinkelt sind, oder/und dass die inneren Übergangskanten der beiden Schlitze zueinander gegensinnig oder und in gleichem Ausmaß bezüglich der Referenzlinie angewinkelt sind.

Die Erfindung betrifft ferner einen Rohrverbund, umfassend ein gemäß den Prinzipien der vorliegenden Erfindung aufgebautes erstes Rohr und ein in einen Verbindungsbereich des ersten Rohrs eingeschobenes zweites Rohr, ferner umfassend eine das erste Rohr in dem Verbindungsbereich umgebende und das erste Rohr radial gegen das zweite Rohr pressende Rohrschelle.

Um die Rohrschelle effizient zur Erreichung einer gasdichten Verbindung der beiden Rohre zu nutzen, wird vorgeschlagen, dass die Rohrschelle die in dem Verbindungsbereich vorgesehenen Schlitze in axialer Richtung im Wesentlichen vollständig überdeckt, vorzugsweise derart, dass ein vom Rohrende entfernter Schlitzgrund der Schlitze durch die Rohrschelle überdeckt ist oder/und ein zwischen dem jeweiligen Schlitzgrund und den Übergangskanten eines jeweiligen Schlitzes liegender Schlitzbereich durch die Rohrschelle vollständig überdeckt ist.

Ferner kann unter Berücksichtigung der im Wesentlichen symmetrischen Ausgestaltung der beiden Schlitze die in Verbindung mit der Rohrschelle zu erzeugende Dichtwirkung dadurch optimiert werden, dass ein Schellenschlossbereich der Rohrschelle im Verbindungsbereich des ersten Rohrs in einem Umfangsbereich mit geringerer Winkelerstreckung zwischen den beiden Schlitzen, vorzugsweise in Umfangsrichtung im Wesentlichen mittig zwischen den beiden Schlitzen, angeordnet ist.

Die vorliegende Erfindung wird nachfolgend mit Bezug auf die beiliegenden Figuren detailliert beschrieben. Es zeigt:
- Fig. 1: einen aus dem Stand der Technik bekannten, zwei ineinander eingeschobene Rohre umfassenden Rohrverbund,
- Fig. 2: den Rohrverbund der Figur 1, geschnitten längs einer Linie II-II in Fig. 1;
- Fig. 3: eine der Fig. 2 entsprechende Darstellung eines gemäß den Prinzipien der vorliegenden Erfindung aufgebauten Rohrverbunds,
- Fig. 4: eine Umfangsabwicklung eines Abschnitts eines Verbindungsbereichs eines Rohres des in Fig. 2 dargestellten Rohrverbunds;
- Fig. 5: einen Abschnitt eines Verbindungsbereichs mit alternativer Ausgestaltung eines Schlitzes.

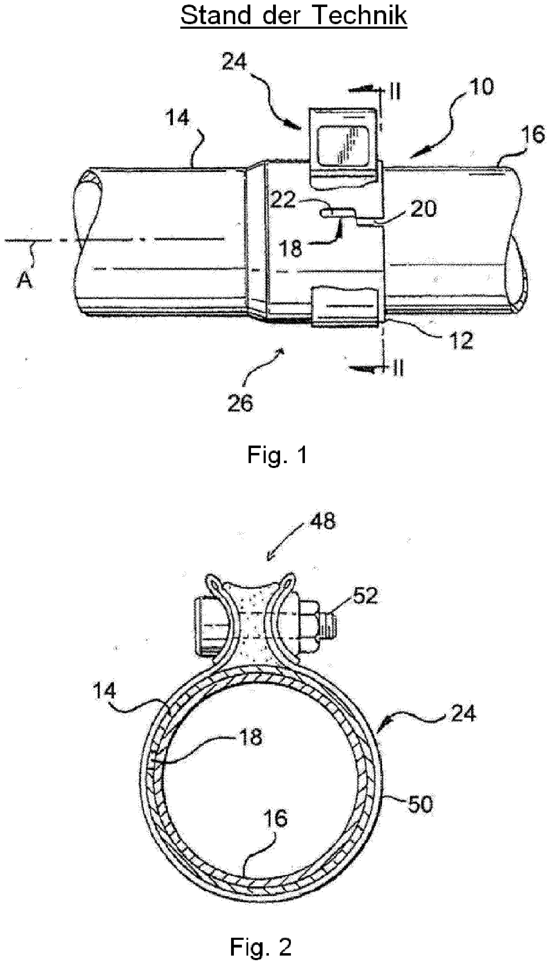

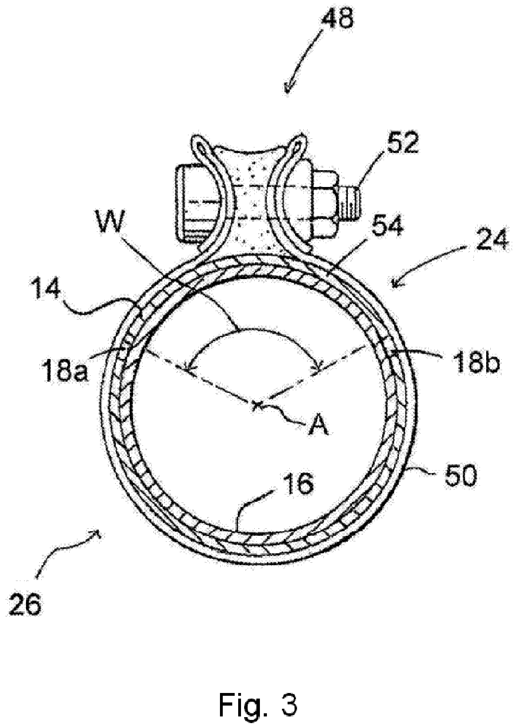

Nachfolgend wird mit Bezug auf die Fig. 3 bis 5 eine erfindungsgemäße Ausgestaltung eines Rohrs bzw. eines damit herzustellenden Rohrverbunds beschrieben. Dieser Rohrverbund kann hinsichtlich seiner grundsätzlichen Ausgestaltung dem vorangehend mit Bezug auf die Fig. 1 und 2 beschriebenen, aus dem Stand der Technik bekannten Rohrverbund 10 entsprechen. Insofern wird hinsichtlich des grundsätzlichen Aufbaus des mit zwei Rohren 14, 16 aufgebauten Rohrverbunds 10 auf die Ausführungen zu den Fig. 1 und 2 verwiesen. Komponenten bzw. Baugruppen, welche vorangehend mit Bezug auf die Fig. 1 und 2 bereits beschriebenen Komponenten bzw. Baugruppen hinsichtlich Aufbau bzw. Funktion entsprechen, sind mit den gleichen Bezugszeichen bezeichnet, wie in den Fig. 1 und 2.

Bei einem erfindungsgemäß aufgebauten Rohr 14 bzw. einem damit realisierten Rohrverbund 16 sind in dem Verbindungsbereich 26 des Rohrs 14, in welchen das andere Rohr 16 einzuschieben ist, zwei in Umfangsabstand zueinander angeordnete Schlitze 18a, 18b vorgesehen. Jeder der beiden Schlitze 18a, 18b weist zwei Schlitzbereiche 20a, 22a bzw. 20b, 22b auf, die vorzugsweise zueinander offen sind. Die beiden ersten Schlitzbereiche 20a, 20b der beiden Schlitze 18a, 18b sind in Richtung einer Rohrlängsachse A offen. Die beiden an die ersten Schlitzbereiche 20a, 20b anschließenden zweiten Schlitzbereiche 22a, 22b stellen jeweils einen Schlitzgrund 28a, 28b, also das jeweilige axiale Ende eines Schlitzes 18a bzw. 18b bereit.

Jeder der ersten Schlitzbereiche 20a, 20b der beiden Schlitze 18a, 18b ist in Richtung vom jeweils anderen Schlitz weg durch eine äußere Schlitzkante 30a, 30b und in Richtung auf dem jeweils anderen Schlitz zu durch eine innere Schlitzkante 32a, 32b in Umfangsrichtung begrenzt. Vorzugsweise erstrecken sich bei jedem der beiden Schlitze 18a, 18b die äußeren und inneren Schlitzkanten 30a, 30b bzw. 32a, 32b zueinander parallel und im Wesentlichen auch parallel zur Rohrlängsachse A, so dass jeder erste Schlitzbereich 20a, 20b eine im Wesentlichen konstante Umfangsbreite B₁ von beispielsweise etwa 4 mm aufweist.

Jeder der zweiten Schlitzbereiche 22a, 22b der beiden Schlitze 18a, 18b ist an seiner von jeweils anderem Schlitz abgewandten Umfangsseite durch eine äußere Schlitzkante 34a, 34b und an seiner dem jeweils anderen Schlitz zugewandten Umfangsseite durch eine innere Schlitzkante 36a, 36b begrenzt. Auch die äußeren und inneren Schlitzkanten 34a, 34b bzw. 36a, 36b der beiden zweiten Schlitzbereiche 22a, 22b erstrecken sich jeweils zueinander und auch zur Rohrlängsachse A vorzugsweise im Wesentlichen parallel, so dass die zweiten Schlitzbereiche 22a, 22b eine im Wesentlichen konstante Schlitzbreite B₂ beispielsweise von etwa 4 mm aufweisen. Somit weisen vorzugsweise bei jedem der beiden Schlitze 18a, 18b der jeweilige erste Schlitzbereich 20a, 20b und zweite Schlitzbereich 22a, 22b die gleiche Umfangsbreite auf.

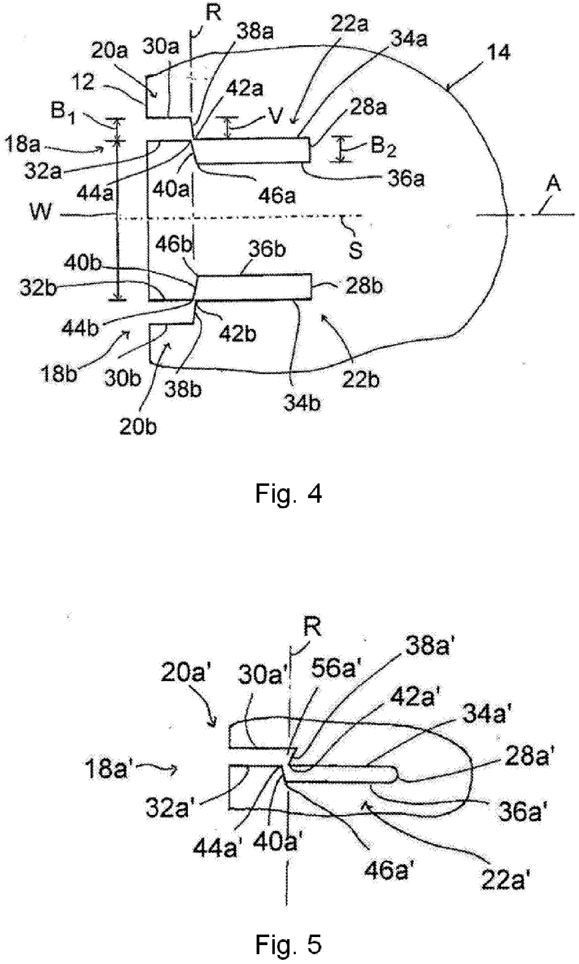

Die Fig. 4 zeigt deutlich, dass bei jedem der beiden Schlitze 18a, 18b der zweite Schlitzbereich 22a, 22b in Umfangsrichtung bezüglich des ersten Schlitzbereichs 20a, 20b versetzt ist. Dabei sind die beiden zweiten Schlitzbereiche 22a, 22b bezüglich des jeweils zugeordneten ersten Schlitzbereichs 20a, 20b zueinander gegensinnig, insbesondere aufeinander zu versetzt. Die zweiten Schlitzbereiche 22a, 22b weisen somit, beispielsweise bezogen auf ihre jeweiligen äußeren Schlitzkanten 34a, 34b oder inneren Schlitzkanten 36a, 36b einen geringeren gegenseitigen Abstand auf, als die beiden ersten Schlitzbereiche 20a, 20b. Insbesondere kann ein bei jedem der beiden Schlitze 18a, 18b somit vorhandener Versatz V zwischen den jeweiligen ersten Schlitzbereich 20a, 20b und zweiten Schlitzbereich 22a, 22b im Wesentlichen der Umfangsbreite B₁ bzw. B₂ eines jeweiligen Schlitzes 18a, 18b in seinen beiden Schlitzbereichen 20a, 20b bzw. 22a, 22b entsprechen. Dies führt dazu, dass beispielsweise bei dem Schlitz 18a die innere Umfangskante 32a des ersten Schlitzbereichs 20a die äußere Umfangskante 34a des zweiten Schlitzbereichs 22a in Richtung der Rohrlängsachse A im Wesentlichen axial fortsetzt bzw. dazu im Wesentlichen keinen Umfangsversatz aufweist.

Entsprechendes gilt auch für die innere Umfangskante 32b des ersten Schlitzbereichs 20b des Schlitzes 18b und die äußere Umfangskante 34b des zweiten Schlitzbereichs 22b dieses Schlitzes 18b.

Bei der in den Fig. 3 und 4 dargestellten Ausgestaltung des Verbindungsbereichs 26 kann der Winkelabstand der jeweiligen inneren Umfangskanten 32a, 32b der beiden ersten Schlitzbereiche 20a etwa 120° betragen. Der entsprechende Winkelabstand der inneren Schlitzkanten 36a, 36b der zweiten Schlitzbereiche 22a, 22b ist dann entsprechend kleiner. Vorzugsweise ist dabei die Ausgestaltung derart, dass die beiden Schlitze 18a, 18b bezüglich einer zur Rohrlängsachse A parallelen Symmetrieachse S zueinander im Wesentlichen spiegelsymmetrisch ausgebildet sind.

Der bei jedem der Schlitze 18a, 18b vorhandene Versatz V der beiden Schlitzbereiche 20a, 22a bzw. 20b, 22b wird im Wesentlichen dadurch eingeführt, dass die jeweiligen äußeren Schlitzkanten 30a, 34a des Schlitzes 18a durch eine äußere Übergangskante 38a miteinander verbunden sind, während die inneren Schlitzkanten 32a, 36a dieses Schlitzes 18a durch eine innere Übergangskante 40a miteinander verbunden sind. In entsprechender Weise sind die äußeren Schlitzkanten 30b, 34b des Schlitzes 18b durch eine äußere Übergangskante 38b miteinander verbunden, während die inneren Schlitzkanten 32b, 36b des Schlitzes 18b durch eine innere Übergangskante 40b miteinander verbunden sind. Bei jedem der beiden Schlitze 18a, 18b sind die inneren bzw. äußeren Übergangskanten 38a, 40a bzw. 38b, 40b bezüglich einer im Wesentlichen in Umfangsrichtung sich erstreckenden Referenzlinie R angewinkelt, erstrecken sich also nicht parallel und nicht orthogonal dazu. Dabei sind die Übergangskanten 38a, 40a des Schlitzes 18a und die Übergangskanten 38b, 40b des Schlitzes 18b zueinander gegensinnig bezüglich der Referenzlinie R angewinkelt, während bei jedem der Schlitze 18a, 18b die bei diesen jeweils vorhandenen Übergangskanten 38a, 40a bzw. 38b, 40b zueinander gleichsinnig, jedoch in unterschiedlichem Ausmaß bezüglich der Referenzlinie R angewinkelt sind. Insbesondere sind die jeweiligen inneren Übergangskanten 40a, 40b bezüglich der Referenzlinie R stärker angewinkelt, als die jeweiligen äußeren Übergangskanten 38a, 38b. Es ergibt sich somit eine Konfiguration, bei welcher ein der inneren Übergangskante 40a näher liegendes Ende 42a der äußeren Übergangskante 38a des Schlitzes 18a axial zwischen den beiden Enden 44a, 46a der inneren Übergangskante 40a liegt. Eine entsprechende Konfiguration ist auch bei dem der inneren Übergangskante 40b näher liegenden Ende 42b der äußeren Übergangskante 38b des Schlitzes 18b bezüglich der Enden 44b, 46b der inneren Übergangskante 40b vorhanden.

Zum Herstellen des Rohrverbunds 10 wird das Rohr 16 in den Verbindungsbereich 26 des Rohrs 14 eingeschoben, und zwar in einem Ausmaß, welches größer ist, als die axiale Erstreckungslänge der beiden Schlitze 18a, 18b, so dass das Rohr 16 mit seinem in den Verbindungsbereich 26 eingeschobenen Bereich die beiden Schlitze 18a, 18b in Richtung der Rohrlängsachse A vollständig überdeckt. Nachfolgend wird die Rohrschelle 24 aufgebracht bzw. die ggf. bereits aufgebrachte Rohrschelle 24 derart positioniert, dass ein Schellenschloss 48 derselben, in welchem Umfangsendbereiche eines den Verbindungsbereich 26 umgebenden, bandartigen Schellenkörpers 50 beispielsweise vermittels eines Schraubbolzens 52 gegeneinander verspannt werden, so positioniert ist, dass er mittig zwischen den beiden Schlitzen 18a, 18b und zwar im Umfangsbereich 54 des Rohrs 14 mit geringerer Winkelerstreckung positioniert ist. Beim Anziehen des Schellenschlosses 48 und somit Verspannen des Schellenkörpers 50 um den Außenumfang des Verbindungsbereichs 26 wird dieser Verbindungsbereich in Umfangsrichtung zusammengespannt und somit radial komprimiert. Dabei nimmt auch die Umfangsbreite der beiden Schlitze 18a, 18b ab, da die jeweiligen äußeren Schlitzkanten 30a, 34a bzw. 30b, 34b sich in Umfangsrichtung auf die jeweiligen inneren Schlitzkanten 32a, 36a, 32b, 36b zu bewegen. Bei dieser Abnahme der Schlitzbreite nähern sich die Enden 42a, 42b der jeweiligen äußeren Übergangskanten 38, 38b den jeweiligen inneren Übergangskanten 40a, 40b an und kommen dort zur Anlage bzw. schneiden in diese ein. Somit wird in demjenigen Bereich, in welchem ein Versatz zwischen den jeweiligen Schlitzbereichen 20a, 22b bzw. 20b, 22b vorhanden ist, ein in Schlitzlängsrichtung wirksamer Abschluss der Schlitze 18a, 18b der zuvor zueinander offenen Schlitzbereiche 20a, 22a bzw. 20b, 22b erzeugt.

Wie anhand der Fig. 1 erkennbar, ist ferner der Schellenkörper 50 der Rohrschelle 48 so dimensioniert, dass er in Richtung der Rohrlängsachse R die Schlitze 18a, 18b im Wesentlichen vollständig überdeckt, insbesondere den jeweiligen zweiten Schlitzbereich 22a, 22b zwischen dem Schlitzgrund 28a, 28b und den in gegenseitiger Anlage stehenden bzw. ineinander einschneidenden Übergangskanten 38a, 40a bzw. 38b, 40b vollständig überdeckt. Somit sind die Schlitze 18a, 18b insbesondere in ihren jeweiligen zweiten Schlitzbereichen 22a, 22b nicht nur in Richtung der Rohrlängsachse A, sondern auch nach radial außen abgeschlossen, so dass ein Austritt des in den Rohren 14, 16 geführten Mediums, beispielsweise dem von einer Brennkraftmaschine eines Fahrzeugs ausgestoßenen Abgas, ausgeschlossen ist.

Aufgrund der im Wesentlichen spiegelsymmetrischen Ausgestaltung der beiden Schlitze 18a, 18b wird die Herstellung dieses gasdichten Abschlusses unterstützt, da dafür gesorgt ist, dass bei der durch den Schellenkörper 50 erzeugten Umfangsverspannung bei jedem der beiden Schlitze 18a, 18b das jeweilige Ende 42a, 42b der äußeren Übergangskante 38a, 38b sich in Umfangsrichtung der zugeordneten inneren Übergangskante 40a, 40b annähert und in diese einschneidet. Dies wird insbesondere dadurch erzeugt, dass beim Anziehen des Schellenschlosses 48 die an dieses angrenzenden und auch die Schlitze 18a, 18b überdeckenden Umfangsbereiche des Schellenkörpers 50 zueinander gegensinnig und aufeinander zu in Umfangsrichtung bewegt werden und somit die entsprechend gegensinnige Bewegung der äußeren Schlitzkanten 30a, 34a des Schlitzes 18a bezüglich der äußeren Schlitzkanten 30b, 34b des Schlitzes 18b erzeugen.

Eine alternative Ausgestaltungsart der vorangehend mit Bezug auf die Fig. 4 detailliert beschriebenen Schlitze 18a, 18b ist in Fig. 5 anhand des dort gezeigten Schlitzes 18a' veranschaulicht. Es ist selbstverständlich, dass bei im Wesentlichen spiegelsymmetrischer Ausgestaltung auch der andere, in Fig. 5 nicht dargestellte Schlitz entsprechend gestaltet sein kann.

Zu erkennen ist in Fig. 5, dass die beiden Übergangskanten 38a' und 40a' zueinander bezüglich der Referenzlinie R gegensinnig angewinkelt sind, so dass im Angrenzungsbereich der äußeren Übergangskante 38a' zur äußeren Schlitzkante 30a' des ersten Schlitzbereichs 20a' eine Hinterschneidung 56a' gebildet ist. Das der inneren Übergangskante 40a' näher liegende Ende 42a' der äußeren Übergangskante 38a' liegt wiederum in Richtung der Rohrlängsachse A axial zwischen den beiden Enden 44a', 46a' der inneren Übergangskante 40a', so dass bei der vorangehend beschriebenen Verringerung der Breite des Schlitzes 18a' die im Angrenzungsbereich der äußeren Übergangskante 38a' an die äußere Schlitzkante 34a' des zweiten Schlitzbereichs 22a' gebildete Kante in die Übergangskante 40a' einschneidet.

Es ist abschließend darauf hinzuweisen, dass die Prinzipien der vorliegenden Erfindung auch bei konstruktiv anderer Ausgestaltung der beiden Schlitze realisiert sein kann. So kann der gegensinnige Versatz der jeweiligen zweiten Schlitzbereiche bezüglich der ersten Schlitzbereiche auch durch einen Versatz der zweiten Schlitzbereiche voneinander bzw. auch der Symmetrieachse weg realisiert sein, so dass die beiden zweiten Schlitzbereiche einen größeren Umfangsabstand bzw. Winkelabstand zueinander aufweisen, als die beiden ersten Schlitzbereiche. Ferner kann insbesondere bei der in Fig. 4 dargestellten Konfiguration der Schlitze bzw. des jeweils vorhandenen Versatzes die Anwinkelung der Übergangskanten auch so gewählt sein, dass die jeweilige äußere Übergangskante bezüglich der Referenzlinie stärker angewinkelt ist, als die innere Übergangskante, so dass das der äußeren Übergangskante näher liegende Ende der inneren Übergangskante bei Abnahme der Umfangsbreite eines jeweiligen Schlitzes in die äußere Übergangskante einschneidet. Bei dem in Fig. 5 dargestellten Beispiel kann die durch eine Anwinkelung der Übergangskante gebildete Hinterschneidung auch im Bereich der inneren Übergangskante bereitgestellt sein.

Während die vorangehend beschriebene und in den Figuren dargestellte Erstreckung der verschiedenen Schlitzbereiche im Wesentlichen parallel zur Rohrlängsachse besonders vorteilhaft ist, können die bzw. zumindest einige der Schlitzbereiche bezüglich der Rohrlängsachse bzw. einer dazu parallelen Linie auch angewinkelt verlaufen, beispielsweise in einem derartigen Sinne, dass die Schlitze bzw.

Schlitzbereiche sich, ausgehend vom Rohrende, einander annähern oder voneinander weg verlaufen.

Ferner ist darauf hinzuweisen, dass die in Fig. 4 erkennbare im Wesentlichen spiegelsymmetrische Gestaltung hinsichtlich einer gleichmäßigen Dichtwirkung in allen Umfangsbereichen besonders vorteilhaft ist. Grundsätzlich können jedoch unter Beibehalt der Prinzipien der vorliegenden Erfindung die beiden Schlitze zueinander unterschiedlich gestaltet sein, insbesondere unterschiedlich dimensioniert sein oder im Übergangsbereich zwischen den jeweiligen ersten und zweiten Schlitzbereichen ein zueinander unterschiedliches Ausmaß des jeweils vorhandenen Versatzes aufweisen.

## Patentansprüche

1. Rohr, insbesondere Abgasführungsrohr für eine Abgasanlage einer Brennkraftmaschine, wobei an wenigstens einem axialen Rohrende (12) ein Verbindungsbereich (26) zur Verbindung des in Richtung einer Rohrlängsachse (A) sich erstreckenden Rohrs (14) mit einem in den Verbindungsbereich (26) einzuschiebenden weiteren Rohr (16) vorgesehen ist, wobei der Verbindungsbereich (26) zwei Schlitze (18a, 18b) umfasst, wobei jeder der beiden Schlitze (18a, 18b) einen dem Rohrende (12) näher gelegenen und in Richtung der Rohrlängsachse (A) offenen ersten Schlitzbereich (20a, 20b) und einen vom Rohrende (12) axial weiter entfernt liegenden und in Umfangsrichtung bezüglich des ersten Schlitzbereichs (20a, 20b) versetzten zweiten Schlitzbereich (22a, 22b) aufweist, wobei die ersten Schlitzbereiche (20a, 20b) und die zweiten Schlitzbereiche (22a, 22b) in Umfangsrichtung jeweils durch eine dem jeweils anderen Schlitz (18a, 18b) zugewandte innere Schlitzkante (32a, 36a, 32b, 36b) und eine von dem jeweils anderen Schlitz (18a, 18b) abgewandte äußere Schlitzkante (30a, 34a, 30b, 34b) begrenzt sind, wobei die inneren Schlitzkanten (32a, 36a, 32b, 36b) der ersten und zweiten Schlitzbereiche (20a, 22a, 20b, 22b) der beiden Schlitze (18a, 18b) durch innere Übergangskanten (40a, 40b) miteinander verbunden sind und die äußeren Schlitzkanten (30a, 34a, 30b, 34b) der ersten und zweiten Schlitzbereiche (20a, 22a, 20b, 22b) der beiden Schlitze (18a, 18b) durch äußere Übergangskanten (38a, 38b) miteinander verbunden sind, wobei die innere Übergangskante (40a, 40b) oder/und die äußere Übergangskante (38a, 38b) beider Schlitze (18a, 18b) bezüglich einer in Umfangsrichtung sich erstreckenden Referenzlinie (R) angewinkelt ist, **dadurch gekennzeichnet, dass** die beiden Schlitze (18a, 18b) bezüglich einer zur Rohrlängsachse (A) im Wesentlichen parallelen Symmetrieachse (S) im Wesentlichen spiegelsymmetrisch ausgebildet sind, und dass die zweiten Schlitzbereiche (22a, 22b) der beiden Schlitze (18a, 18b) in Umfangsrichtung bezüglich der ersten Schlitzbereiche (20a, 20b) aufeinander zu oder voneinander weg versetzt sind.

2. Rohr nach Anspruch 1, **dadurch gekennzeichnet, dass** ein Winkelabstand (W) der inneren Schlitzkanten (32a, 32b) der ersten Schlitzbereiche (20a, 20b) in ihrem an das Rohrende (12) angrenzenden Bereich kleiner als 180° ist, vorzugsweise im Bereich von 110° bis 130°, vorzugsweise bei etwa 120° liegt.

3. Rohr nach Anspruch 1 oder 2, **dadurch gekennzeichnet, dass** bei wenigstens einem Schlitzbereich (20a, 22a, 20b, 22b), vorzugsweise dem ersten Schlitzbereich (20a, 20b) und dem zweiten Schlitzbereich (22a, 22b), von wenigstens einem Schlitz (18a, 18b), vorzugsweise beiden Schlitzen (18a, 18b), die äußere Schlitzkante (30a, 34a, 30b, 34b) oder/und die innere Schlitzkante (32a, 32b, 36a, 36b) sich im Wesentlichen in Richtung der Rohrlängsachse (A) erstreckt oder/und die äußere Schlitzkante (30a, 34a, 30b, 34b) und die innere Schlitzkante (32a, 36a, 32b, 36b) sich zueinander im Wesentlichen parallel erstrecken.

4. Rohr nach einem der vorangehenden Ansprüche, **dadurch gekennzeichnet, dass** bei wenigstens einem Schlitzbereich (20a, 22a, 20b, 22b), vorzugsweise dem ersten Schlitzbereich (20a, 20b) und dem zweiten Schlitzbereich (22a, 22b), von wenigstens einem Schlitz (18a, 18b), vorzugsweise beiden Schlitzen (18a, 18b), die äußere Schlitzkante (30a, 34a, 30b, 34b) und die innere Schlitzkante (32a, 36a, 32b, 36b) einen Umfangsabstand (B₁, B₂) im Bereich von 3 mm bis 5 mm, vorzugsweise etwa 4 mm, aufweisen.

5. Rohr nach einem der vorangehenden Ansprüche, **dadurch gekennzeichnet, dass** die ersten Schlitzbereiche (20a, 20b) der beiden Schlitze (18a, 18b) in Richtung der Rohrlängsachse (A) im Wesentlichen die gleiche Erstreckungslänge aufweisen, oder/und dass die zweiten Schlitzbereiche (22a, 22b) der beiden Schlitze (18a, 18b) in Richtung der Rohrlängsachse (A) im Wesentlichen die gleiche Erstreckungslänge aufweisen.

6. Rohr nach einem der vorangehenden Ansprüche, **dadurch gekennzeichnet, dass** bei beiden Schlitzen (18a, 18b) die innere Übergangskante (40a, 40b) und die äußere Übergangskante (38a, 38b) zueinander gleichsinnig bezüglich der Referenzlinie (R) angewinkelt sind und eine der Übergangskanten (38a, 40a, 38b, 40b), vorzugsweise die innere Übergangskante (40a, 40b), bezüglich der Referenzlinie (R) stärker angewinkelt ist, als die andere der Übergangskanten (38a, 40a, 38b, 40b), vorzugsweise die äußere Übergangskante (38a, 38b), wobei ein der stärker angewinkelten Übergangskante (40a, 40b), vorzugsweise der inneren Übergangskante (40a, 40b), näher liegendes Ende (42a, 42b) der weniger stark angewinkelten Übergangskante (38a, 38b), vorzugsweise der äußeren Übergangskante (38a, 38b), axial zwischen den beiden Enden (44a, 46a, 44b, 46b) der stärker angewinkelten Übergangskante (40a, 40b), vorzugsweise der inneren Übergangskante (40a, 40b), liegt.

7. Rohr nach einem der Ansprüche 1-5, **dadurch gekennzeichnet, dass** bei beiden Schlitzen (18a') die innere Übergangskante (40a') und die äußere Übergangskante (38a') zueinander gegensinnig bezüglich der Referenzlinie (R) angewinkelt sind, derart, dass eine der Übergangskanten (38a'), vorzugsweise die äußere Übergangskante (38a'), mit der daran anschließenden Schlitzkante (30a') des ersten Schlitzbereichs (20a') eine Hinterschneidung (56a') bildet, wobei ein der anderen Übergangskante (40a'), vorzugsweise der inneren Übergangskante (40a'), näher liegendes Ende (42a') der einen Übergangskante (38a'), vorzugsweise der äußeren Übergangskante (38a'), axial zwischen den beiden Enden (44a', 46a') der anderen Übergangskante (40a'), vorzugsweise der inneren Übergangskante (40a'), liegt.

8. Rohr nach einem der Ansprüche 1-7, **dadurch gekennzeichnet, dass** die äußeren Übergangskanten (38a, 38b) der beiden Schlitze (18a, 18b) zueinander gegensinnig bezüglich der Referenzlinie (R) angewinkelt sind.

9. Rohr nach einem der Ansprüche 1-8, **dadurch gekennzeichnet, dass** die äußeren Übergangskanten (38a, 38b) der beiden Schlitze (18a, 18b) in gleichem Ausmaß bezüglich der Referenzlinie (R) angewinkelt sind.

10. Rohr nach einem der Ansprüche 1-9, **dadurch gekennzeichnet**, die inneren Übergangskanten (40a, 40b) der beiden Schlitze (18a, 18b) zueinander gegensinnig bezüglich der Referenzlinie (R) angewinkelt sind.

11. Rohr nach einem der Ansprüche 1-10, **dadurch gekennzeichnet, dass** die inneren Übergangskanten (40a, 40b) der beiden Schlitze (18a, 18b) in gleichem Ausmaß bezüglich der Referenzlinie (R) angewinkelt sind.

12. Rohrverbund, umfassend ein erstes Rohr (14) nach einem der vorangehenden Ansprüche und ein in einen Verbindungsbereich (26) des ersten Rohrs (14) eingeschobenes zweites Rohr (16), ferner umfassend eine das erste Rohr (14) in dem Verbindungsbereich (26) umgebende und das erste Rohr (14) radial gegen das zweite Rohr (16) pressende Rohrschelle (24).

13. Rohrverbund nach Anspruch 12, **dadurch gekennzeichnet, dass** die Rohrschelle (24) die in dem Verbindungsbereich (26) vorgesehenen Schlitze (18a, 18b) in Richtung der Rohrlängsachse (A) im Wesentlichen vollständig überdeckt, vorzugsweise derart, dass ein vom Rohrende (12) entfernter Schlitzgrund (28a, 28b) der Schlitze (18a, 18b) durch die Rohrschelle (24) überdeckt ist oder/und ein zwischen dem jeweiligen Schlitzgrund (28a, 28b) und den Übergangskanten (38a, 40a, 38b, 40b) eines jeweiligen Schlitzes (18a, 18b) liegender Schlitzbereich (22a, 22b) durch die Rohrschelle (24) vollständig überdeckt ist.

14. Rohrverbund nach Anspruch 12 oder 13, **dadurch gekennzeichnet, dass** ein Schellenschlossbereich (48) der Rohrschelle (24) im Verbindungsbereich (24) des ersten Rohrs (14) in einem Umfangsbereich (54) mit geringerer Winkelerstreckung zwischen den beiden Schlitzen (18a, 18b), vorzugsweise in Umfangsrichtung im Wesentlichen mittig zwischen den beiden Schlitzen (18a, 18b), angeordnet ist.

## Claims

1. Pipe, especially exhaust gas-guiding pipe for an exhaust system of an internal combustion engine, wherein a connection area (26) is provided at at least one axial pipe end (12) for connecting the pipe (14) extending in the direction of a pipe longitudinal axis (A) to another pipe (16) to be pushed into the connection area (26), wherein the connection area (26) comprises two slots (18a, 18b), wherein each of the two slots (18a, 18b) has a first slot area (20a, 20b) located closer to the pipe end (12) and open in the direction of the pipe longitudinal axis (A) and a second slot area (22a, 22b), which is located axially farther away from the pipe end (12) and is offset in the circumferential direction in relation to the first slot area (20a, 20b),
wherein the first slot areas (20a, 20b) and the second slot areas (22a, 22b) are limited in the circumferential direction by an inner slot edge (32a, 36a, 32b, 36b) facing the respective other slot (18a, 18b) and by an outer slot edge (30a, 34a, 30b, 34b) facing away from the respective other slot (18a, 18b), wherein the inner slot edges (32a, 36a, 32b, 36b) of the first and second slot areas (20a, 22a, 20b, 22b) of the two slots (18a, 18b) are connected to one another by inner transition edges (40a, 40b); and the outer slot edges (30a, 34a, 30b, 34b) of the first and second slot areas (20a, 22b, 20b, 22b) of the two slots (18a, 18b) are connected to one another by outer transition edges (38a, 38b), wherein the inner transition edge (40a, 40b) or/and the outer transition edge (38a, 38b) of both slots (18a, 18b) is bent at an angle in relation to a reference line (R) extending in the circumferential direction,
**characterized in that** the two slots (18a, 18b) have an essentially mirror-symmetric configuration in relation to a symmetry axis (S) that is essentially parallel to the pipe longitudinal axis (A) and that the second slot areas (22a, 22b) of the two slots (18a, 18b) are offset in the circumferential direction towards one another or away from each other in relation to the first slot areas (20a, 20b).

2. Pipe in accordance with claim 1, **characterized in that** an angular distance (W) of the inner slot edges (32a, 32b) of the first slot areas (20a, 20b) in the area adjoining the pipe end (12) is smaller than 180° and is preferably in the range of 110° to 130° and preferably equals about 120°.

3. Pipe in accordance with claim 1 or 2, **characterized in that** the outer slot edge (30a, 34a, 30b, 34b) or/and the inner slot edge (32a, 32b, 36a, 36b) in at least one slot area (20a, 22a, 20b, 22b), preferably in the first slot area (20a, 20b) and the second slot area (22a, 22b), of at least one slot (18a, 18b) and preferably of both slots (18a, 18b) extends essentially in the direction of the pipe longitudinal axis (A) or/and the outer slot edge (30a, 34a, 30b, 34b) and the inner slot edge (32a, 36a, 32b, 36b) extend essentially parallel to one another.

4. Pipe in accordance with one of the above claims, **characterized in that** the outer slot edge (30a, 34a, 30b, 34b) and the inner slot edge (32a, 36a, 32b, 36b) in at least one slot area (20a, 22a, 20b, 22b), preferably in the first slot area (20a, 20b) and in the second slot area (22a, 22b), of at least one slot (18a, 18b) and preferably of both slots (18a, 18b) have a circumferential distance (B₁, B₂) in the range of 3 mm to 5 mm and preferably about 4 mm.

5. Pipe in accordance with one of the above claims, **characterized in that** the first slot areas (20a, 20b) of the two slots (18a, 18b) have essentially the same length of extension in the direction of the pipe longitudinal axis (A), or/and that the second slot areas (22a, 22b) of the two slots (18a, 18b) have essentially the same length of extension in the direction of the pipe longitudinal axis (A).

6. Pipe in accordance with one of the above claims, **characterized in that** in both slots (18a, 18b), the inner transition edge (40a, 40b) and the outer transition edge (38a, 38b) are bent at an angle in relation to one another in the same direction in relation to the reference line (R) and one of the transition edges (38a, 40a, 38b, 40b), preferably the inner transition edge (40a, 40b), is bent at an angle to a greater extent in relation to the reference line (R) than the other of the transition edges (38a, 40a, 38b, 40b), preferably the outer transition edge (38a, 38b), wherein an end (42a, 42b) of the transition edge (38a, 38b), which is bent at an angle to a lesser extent, preferably of the outer transition edge (38a, 38b), which end is located closer to the transition edge (40a, 40b) bent at an angle to a greater extent, preferably to the inner transition edge (40a, 40b), is located axially between the two ends (44a, 46a, 44b, 46b) of the transition edge (40a, 40b) bent at an angle to a greater extent, preferably of the inner transition edge (40a, 40b).

7. Pipe in accordance with one of the claims 1-5,
**characterized in that** in both slots (18a') the inner transition edge (40a') and the outer transition edge (38a') are bent at an angle in opposite directions in relation to one another relative to the reference line (R), such that one of the transition edges (38a'), preferably the outer transition edge (38a'), forms an undercut (56a') with the slot edge (30a') of the first slot area (20a'), which said slot edge (30a') adjoins it, wherein an end (42a') of one transition edge (38a'), preferably of the outer transition edge (38a'), which end is located closer to the other transition edge (40a'), preferably to the inner transition edge (40a'), is located axially between the two ends (44a', 46a') of the other transition edge (40a'), preferably of the inner transition edge (40a').

8. Pipe in accordance with one of the claims 1-7, **characterized in that** the outer transition edges (38a, 38b) of the two slots (18a, 18b) are bent at an angle in relation to one another in opposite directions in relation to the reference line (R).

9. Pipe in accordance with one of the claims 1-8, **characterized in that** the outer transition edges (38a, 38b) of the two slots (18a, 18b) are bent to an equal extent in relation to the referenced line (R).

10. Pipe in accordance with one of the claims 1-9, **characterized in that** the inner transition edges (40a, 40b) of the two slots (18a, 18b) are bent at an angle in relation to one another in opposite directions in relation to the reference line (R).

11. Pipe in accordance with one of the claims 1-10, **characterized in that** the inner transition edges (40a, 40b) of the two slots (18a, 18b) are bent to an equal extent in relation to the reference line (R).

12. Pipe assembly, comprising a first pipe (14) in accordance with one of the above claims and a second pipe (16) pushed into a connection area (26) of the first pipe (14), further comprising a pipe clamp (24), which surrounds the first pipe (14) in the connection area (26) and presses the first pipe (14) radially against the second pipe (16).

13. Pipe assembly in accordance with claim 12, **characterized in that** the pipe clamp (24) covers the slots (18a, 18b) provided in the connection area (26) essentially fully in the direction of the pipe longitudinal axis (A), preferably such that a slot bottom (28a, 28b) of the slots (18a, 18b), which slot bottom is located at a distance from the pipe end (12), is covered by the pipe clamp (24) or/and a slot area (22a, 22b) located between the respective slot bottom (28a, 28b) and the transition edges (38a, 40a, 38b, 40b) of a respective slot (18a, 18b) is fully covered by the pipe clamp (24).

14. Pipe assembly in accordance with claim 12 or 13, **characterized in that** a clamp lock area (48) of the pipe clamp (24) is arranged in the connection area (24) of the first pipe (14) in a circumferential area (54) with a smaller angular extension between the two slots (18a, 18b), preferably essentially centrally between the two slots (18a, 18b) in the circumferential direction.

## Revendications

1. Tuyau, en particulier tuyau de guidage des gaz d'échappement pour un système d'échappement d'un moteur à combustion interne, dans lequel une zone de raccordement (26) est prévue à au moins une extrémité de tuyau axiale (12) pour relier le tuyau (14) s'étendant dans la direction d'un axe longitudinal de tuyau (A) à un autre tuyau (16) à introduire dans la zone de raccordement (26), la zone de raccordement (26) comprenant deux fentes (18a), 18b), chacune des deux fentes (18a, 18b) présentant une première zone de fente (20a, 20b) située plus près de l'extrémité de tuyau (12) et ouverte dans la direction de l'axe longitudinal de tuyau (A) et une seconde zone de fente (22a, 22b) située axialement plus loin de l'extrémité de tuyau (12) et décalée dans la direction circonférentielle par rapport à la première zone de fente (20a, 20b),
dans laquelle les premières zones de fente (20a, 20b) et les secondes zones de fente (22a, 22b) sont limitées dans la direction circonférentielle par un bord de fente intérieur (32a, 36a, 32b, 36b) faisant face à l'autre fente respective (18a, 18b) et par un bord de fente extérieur (30a, 34a, 30b, 34b) opposé à l'autre fente respective (18a, 18b), dans lequel les bords intérieurs (32a, 36a, 32b, 36b) des première et deuxième zones de fente (20a, 22a, 20b, 22b) des deux fentes (18a, 18b) sont reliés entre eux par des bords de transition intérieurs (40a, 40b) et les bords extérieurs (30a, 34a, 30b, 34b) des première et deuxième zones de fente (20a, 22b, 20b, 22b) des deux fentes (18a, 18b) sont reliés entre eux par des bords de transition extérieurs (38a, 38b), dans lequel le bord de transition intérieur (40a, 40b) et/ou le bord de transition extérieur (38a, 38b) des deux fentes (18a, 18b) est plié selon un angle par rapport à une ligne de référence (R) s'étendant dans la direction circonférentielle, **caractérisé en ce que** les deux fentes (18a, 18b) ont une configuration essentiellement symétrique en miroir par rapport à un axe de symétrie (S) qui est essentiellement parallèle à l'axe longitudinal de tuyau (A) et **en ce que** les secondes zones de fente (22a, 22b) des deux fentes (18a, 18b) sont décalées dans la direction circonférentielle l'une vers l'autre ou à l'opposé l'une de l'autre par rapport aux premières zones de fente (20a, 20b).

2. Tuyau selon la revendication 1, **caractérisé en ce qu'**une distance angulaire (W) des bords de fente intérieurs (32a, 32b) des premières zones de fentes (20a, 20b) dans la zone adjacente à l'extrémité de tuyau (12) est inférieure à 180° et se situe de préférence dans la plage de 110° à 130° et est de préférence égale à environ 120°.

3. Tuyau selon la revendication 1 ou 2, **caractérisé en ce que** le bord de fente extérieur (30a, 34a, 30b, 34b) et/ou le bord de fente intérieur (32a, 32b, 36a, 36b) dans au moins une zone de fente (20a, 22a, 20b, 22b), de préférence dans la première zone de fente (20a, 20b) et la deuxième zone de fente (22a, 22b), d'au moins une fente (18a, 18b) et de préférence des deux fentes (18a, 18b) s'étend essentiellement dans la direction de l'axe longitudinal de tuyau (A) et/ou le bord de fente extérieur (30a, 34a, 30b, 34b) et le bord de fente intérieur (32a, 36a, 32b, 36b) s'étendent essentiellement parallèlement l'un à l'autre.

4. Tuyau selon l'une des revendications précédentes, **caractérisé en ce que** le bord de fente extérieur (30a, 34a, 30b, 34b) et le bord de fente intérieur (32a, 36a, 32b, 36b) dans au moins une zone de fente (20a, 22a, 20b, 22b), de préférence dans la première zone de fente (20a, 20b) et dans la deuxième zone de fente (22a, 22b), d'au moins une fente (18a, 18b) et de préférence des deux fentes (18a, 18b) ont une distance circonférentielle (B₁, B₂) comprise entre 3 mm et 5 mm et de préférence d'environ 4 mm.

5. Tuyau selon l'une des revendications précédentes, **caractérisé en ce que** les premières zones de fente (20a, 20b) des deux fentes (18a, 18b) ont essentiellement la même longueur d'extension dans la direction de l'axe longitudinal de tuyau (A), et/ou **en ce que** les secondes zones de fente (22a, 22b) des deux fentes (18a, 18b) ont essentiellement la même longueur d'extension dans la direction de l'axe longitudinal de tuyau (A).

6. Tuyau selon l'une des revendications précédentes, **caractérisé en ce que** dans les deux fentes (18a, 18b), le bord de transition intérieure (40a, 40b) et le bord de transition extérieure (38a, 38b) sont pliés en angle l'une par rapport à l'autre dans la même direction par rapport à la ligne de référence (R) et **en ce qu'**un des bords de transition (38a, 40a, 38b, 40b), de préférence le bord de transition intérieure (40a, 40b), est plus fortement plié en angle par rapport à la ligne de référence (R) que l'autre des bords de transition (38a, 40a, 38b, 40b), de préférence le bord de transition extérieur (38a, 38b), dans lequel une extrémité (42a, 42b) du bord de transition (38a, 38b) plié à un angle moindre, de préférence du bord de transition extérieur (38a, 38b) située plus près du bord de transition (40a, 40b) pliée à un angle plus important, de préférence le bord de transition intérieure (40a, 40b), est située axialement entre les deux extrémités (44a, 46a, 44b, 46b) de le bord de transition (40a, 40b) plié à un angle plus important, de préférence du bord de transition intérieure (40a, 40b).

7. Tuyau selon une des revendications 1 à 5,
**caractérisé en ce que** dans les deux fentes (18a'), le bord de transition intérieure (40a') et le bord de transition extérieure (38a') sont pliés en angle dans des directions opposées l'un par rapport à l'autre par rapport à la ligne de référence (R), de sorte que l'un des bords de transition (38a'), de préférence le bord de transition extérieure (38a'), forme une contre-dépouille (56a') avec le bord de fente (30a') de la première zone de la fente (20a'), auquel ledit bord de fente (30a') se raccorde, dans lequel une extrémité (42a') d'un bord de transition (38a'), de préférence du bord de transition extérieur (38a') située plus près de l'autre bord de transition (40a'), de préférence du bord de transition intérieur (40a'), est située axialement entre les deux extrémités (44a', 46a') de l'autre bord de transition (40a'), de préférence du bord de transition intérieur (40a').

8. Tuyau selon l'une des revendications 1-7, **caractérisé en ce que** les bords de transition extérieurs (38a, 38b) des deux fentes (18a, 18b) sont pliés en angle l'un par rapport à l'autre dans des directions opposées par rapport à la ligne de référence (R).

9. Tuyau selon l'une des revendications 1-8, **caractérisé en ce que** les bords de transition extérieurs (38a, 38b) des deux fentes (18a, 18b) sont pliés en angle de manière égale par rapport à la ligne de référence (R).

10. Tuyau selon l'une des revendications 1-9, **caractérisé en ce que** les bords de transition intérieurs (40a, 40b) des deux fentes (18a, 18b) sont pliés en angle l'un par rapport à l'autre dans des directions opposées par rapport à la ligne de référence (R).

11. Tuyau selon l'une des revendications 1 à 10, **caractérisé en ce que** les bords de transition intérieurs (40a, 40b) des deux fentes (18a, 18b) sont pliés en angle de manière égale par rapport à la ligne de référence (R).

12. Assemblage de tuyaux, comprenant un premier tuyau (14) selon l'une des revendications précédentes et un second tuyau (16) introduit dans une zone de raccordement (26) du premier tuyau (14), comprenant en outre un collier de serrage (24), qui entoure le premier tuyau (14) dans la zone de raccordement (26) et presse le premier tuyau (14) radialement contre le second tuyau (16).

13. Assemblage de tuyaux selon la revendication 12, **caractérisé en ce que** le collier de serrage (24) couvre les fentes (18a, 18b) prévues dans la zone de raccordement (26) essentiellement entièrement dans la direction de l'axe longitudinal de tuyau (A), de préférence de telle sorte qu'un fond de fente (28a, 28b) des fentes (18a, 18b) situé à une certaine distance de l'extrémité de tuyau (12), est recouvert par le collier de serrage (24) et/ou une zone de fente (22a, 22b) située entre le fond de fente (28a, 28b) et les bords de transition (38a, 40a, 38b, 40b) d'une fente (18a, 18b) est entièrement recouverte par le collier de serrage (24).

14. Assemblage de tuyaux selon la revendication 12 ou 13, **caractérisé en ce qu'**une zone de verrouillage (48) du collier de serrage (24) est disposée dans la zone de raccordement (24) du premier tuyau (14) dans une zone circonférentielle (54) avec une extension angulaire plus petite entre les deux fentes (18a, 18b), de préférence essentiellement au centre entre les deux fentes (18a, 18b) dans la direction circonférentielle.
